Europäisches Patentamt

European Patent Office

Office européen des brevets

(11) Publication number: **0 165 767**
**B1**

## EUROPEAN PATENT SPECIFICATION

(45) Date of publication of patent specification: **23.05.90**

(21) Application number: **85304178.8**

(22) Date of filing: **12.06.85**

(51) Int. Cl.⁵: **G 02 F 1/13, G 01 L 1/24,
G 01 N 21/23**

(54) **Polariscope having liquid crystal cells.**

(30) Priority: **14.06.84 GB 8415129**

(43) Date of publication of application:
**27.12.85 Bulletin 85/52**

(45) Publication of the grant of the patent:
**23.05.90 Bulletin 90/21**

(84) Designated Contracting States:
**DE FR**

(56) References cited:
**EP-A-0 076 651**

**PATENTS ABSTRACTS OF JAPAN, vol. 7, no.
113 (P-197) 1258r, 18th May 1983; & JP - A - 58
35 425 (CANON K.K.) 02-03-1983**

(73) Proprietor: **NATIONAL RESEARCH
DEVELOPMENT CORPORATION
101 Newington Causeway
London SE1 6BU (GB)**

(72) Inventor: **Hearn, Edwin John
Fairhaven, 15A Rea Avenue
Rubery Birmingham B45 9SR (GB)**
Inventor: **Walker, Neil
32 Winchester Avenue
Nuneaton Warwickshire CV10 ODS (GB)**
Inventor: **McDonnell, Damien Gerald
Flat 10, Eatonhurst Barnards Green
Malvern Worcestershire (GB)**
Inventor: **Hughes, Anthony James
8 Birchwood Road
Malvern Link Worcestershire WR14 1LD (GB)**

(74) Representative: **Cullis, Roger et al
Patent Department National Research
Development Corporation 101 Newington
Causeway
London SE1 6BU (GB)**

EP 0 165 767 B1

Courier Press, Leamington Spa, England.

## Description

This invention relates to polariscopes and, in particular to polariscopes incorporating Freedericksz cells.

A polariscope is an instrument used to study the interference patterns produced, for example, when a stressed model is viewed in polarised light, the stress causing the model to become birefringent. A form of construction of these instruments is described in our patent application GB-A-2107482. In such polariscopes, a polariser and an associated first quarter-wave plate, and an analyser and an associated second quarter-wave plate are arranged on opposite sides of a sample under test. First and second liquid crystal devices are provided between the quarter-wave plate and the polariser on one side and between the quarter-wave plate and the analyser on the other side and can be switched between two optical states to alter the polariscope between a plane-polarised and a circularly-polarised mode. With polariscopes of this type, measurements of fractional fringe orders are carried out by means of rotation of the analyser (the Tardy or Senarmont method) or by insertion of Babinet or Babinet-Soleil devices.

It has now proved possible to improve polariscopes of the above type by replacing the mechanical actions of analyser rotation or Babinet/Babinet-Soleil device insertion with an electrically-controlled Freedericksz cell which does not involve mechanical movement.

A Freedericksz cell is a liquid crystal device which can act as an electrically tunable retardation unit. The cell comprises two glass plates with conducting coatings enclosing a liquid crystal. There are two types of Freedericksz cell — homogeneous and homeotropic. In the homogeneous cell, in addition to the conducting layer, the two plates have an aligning layer which is typically a 1μm layer of unidirectionally rubbed polyimide and these are assembled so that the directions of rubbing are antiparallel. The units of the homogeneous liquid crystal align themselves along this direction producing a uniform birefringence over the field at zero voltage and zero or near-zero birefringence at a sufficiently high voltage. A homeotropic Freedericksz cell behaves in the opposite manner, having zero birefringence at zero voltage and becoming aligned uniaxially in the plane of the cell at a sufficiently high voltage.

According to the present invention there is provided a polariscope having a sample location means positioned between first and second lineal polariser and having first and second switchable liquid crystal devices, each associated with a quarter wave plate, positioned respectively between said first polariser and said sample means and between said second polariser and said sample means, in order to alter the state of the polariscope between plane-polarised and circularly polarised mode, characterised in that in addition a Freedericksz cell birefringence compensator is positioned between said polarisers and in that switching means are arranged for applying predetermined voltages to said Freedericksz cell compensator.

An embodiment of the invention will now be described by way of example with reference to the accompanying drawings, in which

Figure 1 is a diagrammatic arrangement of a polariscope incorporating Freedericksz cell compensating means,

Figure 2a to c shows schematically the alignment and corresponding relative retardation of a homogeneous Freedericksz cell, and

Figure 3a to c is the corresponding schematic diagram for a homeotropic Freedericksz cell.

A polariscope in accordance with a specific embodiment of the invention comprises a light source 1, a polariser 2, a first 45° twisted nematic liquid crystal cell 3 and associated quarter-wave plate 4, location means 5 for positioning a sample under test, Freedericksz cell compensating means 6 with variable alternating voltage power supply 7 for tuning purposes, second quarter-wave plate 8 and 45° twisted nematic liquid crystal 9 cell and an analyser 10. Switching means 11 is provided for the 45° twist cells 3, 9.

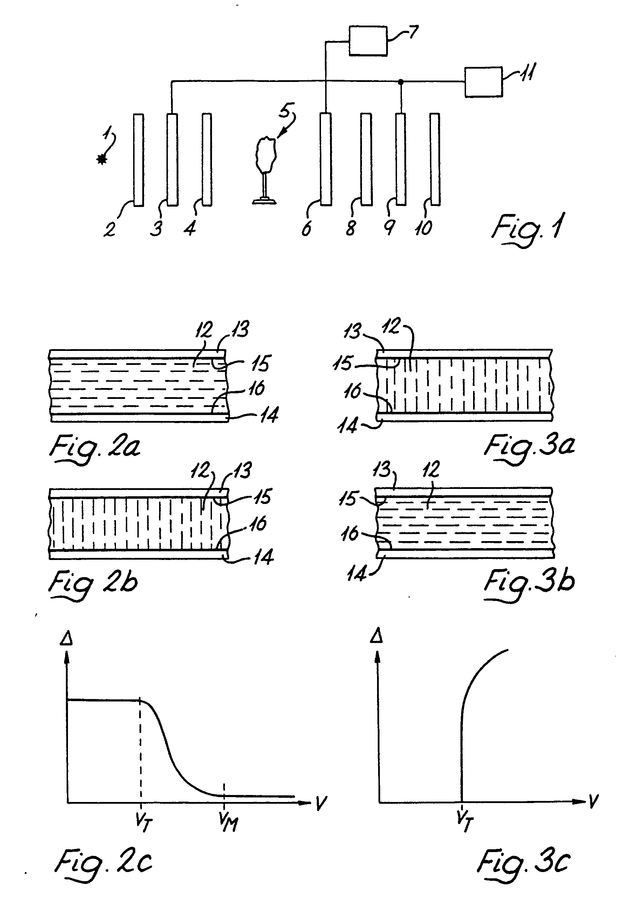

One form of polariscope in accordance with the invention incorporates homogeneous Freedericksz cells. In such cells (Figure 2) a nematic liquid crystal having positive dielectric anisotropy 12 is enclosed between two glass plates 13, 14 provided with translucent conductive coatings for the application of a potential difference across the cell. In addition to the conducting layer, the two plates have a surfactant 15, 16 which is aligned in the same direction but opposite sense on each plate. In the non-switched state (Figure 2a) the liquid crystal is aligned with this surfactant layer and when a potential difference is applied, above a predetermined threshold, the liquid crystal alignment becomes orientated perpendicular to the plates (Figure 2b). At a sufficiently high field, the perpendicular alignment is complete and zero birefringence results.

Between the threshold voltage, $V_t$, and the minimum voltage, $V_m$, necessary for complete realignment, the optical retardation $\triangle$ varies uniformly, though not linearly, with applied voltage (Figure 2c). Since the maximum retardation of a Freedericksz cell can be several wavelengths, it is possible to obtain a useful range of retardations by application of corresponding voltages.

A homeotropic liquid crystal Freedericksz cell (Figure 3) containing a nematic liquid crystal having negative dielectric anisotropy behaves in an opposite manner, having zero birefringence at zero applied voltage (Figure 3a) and becoming aligned uniaxially in the plane of the cell at a sufficiently high voltage (Figure 3b).

For example, an organo-silane coating may be deposited on the substrates so that the direction is perpendicular to the cell walls. The liquid crystal has a negative dielectric anisotropy. Therefore it will align with an electric field at right angles to the direction of a liquid crystal with positive dielectric anisotropy.

A particular advantage of polariscopes in accordance with the present invention is that the Freedericksz cells may be used as electrically controlled compensators.

Conventional photoelastic compensation techniques involve either mechanical movement of optical units (Faraday or Senarmont procedures) or the insertion of crystal wedge devices (Babinet and Babinet-Soleil technique). The movement necessary to produce a minimum in the light intensity at the point of interest is calibrated in terms of isochromatic fringe order.

A Freedericksz cell can produce sufficiently high retardation for use as a compensator. The change in fringe order as a function of applied voltage can be stored as a calibration curve, for example, in computer memory. If the applied voltage is computer controlled, then rapid determination of the isochromatic fringe order is possible.

The Freedericksz cell (in either its homogeneous or homeotropic form) thus provides the facility to use these variable retardations to "compensate" fringe orders viewed in the model back to zero fringe order (blackness) and hence to obtain absolute values of both integral and fractional isochromatic fringe orders. It can thus replace conventional compensation procedures such as Tardy, Senarmont, Babinet, Babinet-Soleil etc. which involve either mechanical movement of the optical elements of the polariscope or insertion of crystal wedge devices, the movement necessary to produce a minimum light intensity at the point of interest being calibrated in terms of isochromatic fringe order.

The Freedericksz cell proposals are particularly attractive in the development of automatic or semi-automatic optical data acquisition systems such as polariscopes since the change in fringe orders produced by the cell as a function of applied voltage can be stored as a calibration curve in e.g. computer memory. If the voltage excitation of the cell is controlled by the computer then rapid automatic determination of the isochromatic fringe order is possible. The technique is equally applicable to both transmission and reflection polariscopes and, indeed, to any other device where relative retardations are required to be measured.

Furthermore, application of an appropriate voltage to the Freedericksz cell results in a relative retardation of exactly a quarter-wavelength. It is therefore possible for quarter-wave plates to be replaced by Freedericksz cells with a constant prescribed excitation in addition to the wider use of such cells with variable excitation as compensation devices.

## Claims

1. A polariscope having a sample location means (5) positioned between first (2) and second (10) linear polarisers and having first (3) and second (9) switchable liquid crystal devices, each associated with a quarter wave plate (4, 8), positioned respectively between said first polariser (2) and said sample means and between said second polariser (10) and said sample means, in order to alter the state of the polariscope between plane-polarised and circularly polarised mode, characterised in that in addition a Freedericksz cell birefringence compensator (6) is positioned between said polarisers (2, 10) and in that switching means (7) are arranged for applying predetermined voltages to said Freedericksz cell compensator (6).

2. A polariscope having a sample location means positioned between first and second liquid crystal devices as claimed in Claim 1 including a Freedericksz cell wherein a nematic liquid crystal having positive dielectric anisotropy (12) is contained in enclosure means (13, 14) between a pair of translucent electrodes.

3. A polariscope as claimed in Claim 2 wherein said enclosure means comprises a pair of translucent plates each having a surfactant layer (16, 16), said layers being aligned in a common direction but opposite sense.

4. A polariscope having a sample location means positioned between first and second liquid crystal devices as claimed in Claim 1 including a Freedericksz cell wherein a liquid crystal (12) having a negative dielectric anisotropy is contained in enclosure means (13, 14) between a pair of translucent electrodes.

5. A polariscope as claimed in Claim 4 having a surface layer of an organo-silane compound to cause said liquid crystal to align perpendicular to the walls of the enclosure means (13, 14).

## Patentansprüche

1. Polarisationsgerät mit einer zwischen zwei Linearpolarisatoren (2 und 10) angeordneten Aufnahme (S) für Probestücke und zwei jeweils einer Lambda-Viertel-Platte (4 und 8) zugeordneten schaltbaren Flüssigkristall-Mechanismen (3 und 9), die jeweils zwischen Polarisator (2 bzw. 10) und der Probenaufnahme angeordnet sind, wobei die Arbeitsweise des Polarisationsgerätes zwischen linearpolarisiert und kreispolarisiert umgeschaltet werden kann, dadurch gekennzeichnet, daß zusätzlich ein doppelbrechender Freedericksz-Zellenkompensator (6) zwischen den beiden Polarisatoren (2 und 10) angeordnet ist, und eine Schaltung (7) zum Anlegen bestimmter Spannungen an den Freedericksz-Zellenkompensator (6) vorhanden ist.

2. Polarisationsgerät mit einer zwischen zwei Flüssigkristall-Mechanismen angeordneten Aufnahme für Probestücke nach Anspruch 1, wobei die Freedericksz-Zelle einen nematischen Flüssigkeitskristall (12) mit positiver dielektrischer Anisotropie aufweist, der in einer Umhüllung (13, 14) zwischen zwei lichtdurchlässigen Elektroden angeordnet ist.

3. Polarisationsgerät nach Anspruch 2, wobei die Umhüllung zwei lichtdurchlässige Platten aufweist, die je eine grenzflächenaktive Schicht (15, 16) haben, wobei die Schichten mit gegensätzlicher Orientierung in gleicher Richtung ausgerichtet sind.

4. Polarisationsgerät mit einer zwischen zwei Flüssigkristall-Mechanismen angeordneten Aufnahme für Probestücke nach Anspruch 1, wobei die Freedericksz-Zelle einen Flüssigkristall (12) mit negativer dielektrischer Anistropie aufweist, der mit einer Umhüllung (13, 14) zwischen zwei lichtdurchlässigen Elektroden angeordnet ist.

5. Polarisationsgerät nach Anspruch 4, das eine Oberflächenschicht aus einer organischen Silan-Verbindung aufweist, um den Flüssigkristall senkrecht zu den Wänden der Umhüllung (13, 14) auszurichten.

**Revendications**

1. Polariscope comportant des moyens (5) de positionnement d'échantillons disposés entre un premier polariseur linéaire (2) et un second polariseur linéaire (10) et comportant un premier dispositif à cristal liquide commutable (3) et un second dispositif à cristal liquide commutable (9), dont chacun est associé à une plaque quart-d'onde (4, 8) disposée respectivement entre ledit premier polariseur (2) et lesdits moyens de positionnement d'échantillons et entre ledit second polariseur (10) et lesdits moyens de positionnement d'échantillons, de manière à modifier l'état du polariscope entre le mode à polarisation plane et le mode à polarisation circulaire, caractérisé en ce qu'en outre un compensateur de biréfringence à cellule de Freedericksz (6) est disposé entre lesdits polariseurs (2, 10) et en ce que des moyens de commutation (16) sont agencés de manière à appliquer les tensions prédéterminées audit compensateur à cellule de Freedericksz (6).

2. Polariscope comportant des moyens de positionnement d'échantillons disposés entre des premier et second dispositifs à cristal liquide selon la revendication 1, incluant une cellule de Freedericksz, dans laquelle un cristal liquide nématique possédant une anisotropie diélectrique positive (12) est logé dans des moyens en forme d'enceinte (13, 14), entre deux électrodes transparentes.

3. Polariscope selon la revendication 2, dans lequel lesdits moyens en forme d'enceinte comprennent un couple de plaques transparentes possédant chacune une couche d'agent tensioactif (16, 16), lesdites couches étant alignées dans une direction commune, mais dans des sens opposés.

4. Polariscope comportant des moyens de positionnement d'échantillons disposés entre lesdits premier et second dispositifs à cristal liquide selon la revendication 1, incluant une cellule de Freedericksz, dans laquelle un cristal liquide (12) possédant une anisotropie diélectrique négative est logé dans des moyens en forme d'enceinte (13, 14) entre deux électrodes transparentes.

5. Polariscope selon la revendication 4, possédant une couche superficielle formée d'un composé d'organosilane servant à amener ledit cristal liquide à prendre une orientation perpendiculaire aux parois des moyens en forme d'enceinte (13, 14).

Fig.1

Fig.2a

Fig.3a

Fig 2b

Fig.3b

Fig.2c

Fig.3c